# DEMANDE DE BREVET EUROPEEN

(11) **EP 4 184 922 A1**
(43) Date de publication de la demande: **24.05.2023**
(21) Numéro de dépôt: 22206112.9
(22) Date de dépôt: 08.11.2022
(51) Int. Cl.: H04N 21/2387, H04N 21/462, H04N 21/472

(54) **PROCÉDÉ DE GESTION DE L' ACCÈS À UN CONTENU MULTIMÉDIA**

(30) Priorité: 23.11.2021 FR 2112372
(71) Demandeur: Orange, 92130 Issy-les-Moulineaux (FR)
(72) Inventeur: RIVOALEN, Mathieu, 92326 Chatillon (FR); MARCHAND, Hervé, 92326 Chatillon (FR)

(57) **Abrégé**

La demande concerne un procédé de gestion de l'accès, par un dispositif de lecture (STB), à un contenu multimédia (CNT) accessible depuis une source (SP), dite source principale, depuis laquelle la diffusion du contenu a commencé, un déplacement de l'instant de lecture, au cours de la lecture, étant apte à déclencher une lecture depuis une première source sélectionnée par défaut et offrant une première qualité de restitution, le procédé comprenant
a) Une étape de réception d'une requête d'accès audit contenu en cours de diffusion;
b) Une étape d'obtention d'un ensemble de sources de données (SS1(VOD)/SS2(TVOD)/SS3(RCD)), dites sources secondaires, depuis lesquelles le contenu est accessible ;
c) Une étape de réception, au cours de la lecture, d'une commande de déplacement de l'instant de lecture ;
d) Une étape de sélection d'une source ayant une qualité supérieure.

## Description

### Domaine technique

Le domaine de l'invention est celui des contenus multimédias numériques, à savoir les contenus audio et/ou vidéo numériques, également appelés contenus audiovisuels.

L'invention se rapporte tout particulièrement à un procédé de gestion de l'accès à un contenu multimédia.

Un dispositif de lecture vise tout dispositifs aptes à recevoir des flux multimédias par exemple un décodeur, un téléphone mobile, une tablette, etc.

Le contenu visé ici est un contenu ayant une heure de diffusion programmée. Un tel contenu est par exemple un contenu diffusé en temps réel, aussi appelé contenu « live », par une chaîne de télévision.

### Etat de la technique

Il arrive parfois de manquer le début d'un programme télévisé (film, série, etc.). Une fonction appelée « reprise du début » ou « lire depuis le début » ou « rattrapage » (appelée également « Start Over » ou « Restart » par l'homme du métier) permet de reprendre, à tout moment, un programme en cours de diffusion depuis son commencement. Par exemple, si un film commence à 20h50 sur un canal de diffusion (une chaîne de télévision) et qu'un utilisateur zappe sur cette chaîne de télévision à 21h17, il peut lancer la fonction « reprise du début » afin de pouvoir lire le contenu depuis son début.

Généralement, la diffusion de contenus en direct s'appuie sur une technologie de diffusion en multidiffusion (aussi appelé diffusion « multipoint » ou « diffusion de groupe » ou encore « Multicast ») par l'homme du métier. Cette technologie permet d'économiser énormément de bande passante dans le réseau d'un opérateur qui gère la diffusion car le contenu est répliqué au plus près des dispositifs de lecture. Par contre, quand un dispositif de lecture requiert l'utilisation de la fonction « lire du début », un accès au contenu demandé déclenche un basculement automatique de la technologie multicast vers une technologie de diffusion de contenu en point à point (unicast). La consommation de bande passante dans le réseau de l'opérateur augmente donc considérablement du fait de la transmission en point à point entre le serveur contenu et l'ensemble des dispositifs de lecture ayant demandé une utilisation de la fonction « start over » ; par exemple lorsque le contenu demandé est un contenu à forte audience, le nombre de connexions en point à point peut devenir gigantesque et entraîner un phénomène dit de goulot d'étranglement de la bande passante, qui nuit aux performances du réseau. De plus, les contenus transmis en mode point ont une qualité généralement plus faible que lorsqu'ils sont diffusés en mode multicast. La qualité de l'image est alors moins bonne que lors de la diffusion du contenu en Direct. L'expérience utilisateur est alors dégradée.

L'invention offre une solution ne présentant pas les inconvénients de l'état de la technique.

### L'invention

A cet effet, selon un premier aspect fonctionnel, l'invention a pour objet un procédé de gestion de l'accès, par un dispositif de lecture, à un contenu multimédia accessible depuis une source, dite source principale, depuis laquelle la diffusion du contenu a commencé, un déplacement de l'instant de lecture, au cours de la lecture, étant apte à déclencher une lecture depuis une première source sélectionnée par défaut et offrant une première qualité de restitution, le procédé comprenant
a) Une étape de réception d'une requête d'accès audit contenu en cours de diffusion;
b) Une étape d'obtention d'un ensemble de sources de données, dites sources secondaires, depuis lesquelles le contenu est accessible ;
c) Une étape de réception, au cours de la lecture, d'une commande de déplacement de l'instant de lecture ;
d) Une étape de sélection d'une source en fonction de la première qualité de restitution et de la deuxième qualité de restitution.

Selon l'invention, lorsqu'un contenu est en cours de diffusion depuis une source de données principale, par exemple un programme ou film diffusé sur une chaîne de télévision, et qu'une requête de reprise du contenu depuis le début est reçue par le dispositif de lecture, l'entité de gestion recherche toutes les sources de données aptes à fournir ce même contenu. Une fois les sources de données à disposition, l'entité sélectionne une source, source principale ou source secondaire, pour la poursuite de la lecture en fonction de la première et de la deuxième qualité de restitution. Une fois la source sélectionnée, le dispositif de lecture requiert un accès au contenu depuis la source sélectionnée.

Grâce à l'invention, une activation de la fonction de reprise depuis le début offre un accès possible au même contenu, depuis le début ou à un instant ultérieur, via des sources de données distinctes offrant un accès au même contenu.

Selon un premier mode de réalisation, la source secondaire est sélectionnée si la deuxième qualité de restitution est au moins égale à la première qualité de restitution. Ce mode assure que, lors de la poursuite de la lecture, la restitution sera d'une qualité de restitution au moins supérieure à la première qualité associée à la source principale sélectionnée par défaut.

Selon un deuxième mode de réalisation l'étape d'obtention est suivie d'une étape de demande de restitution d'identifiants sélectionnables représentatifs des sources de données secondaires. Dans certains cas, par exemple dans le cas du streaming adaptatif, plusieurs qualités d'image (débits d'encodage) sont disponibles pour un même contenu. Selon une variante du premier mode, lorsque plusieurs qualités sont disponibles pour un même contenu, tout ou partie des qualités d'images disponibles sont restitués et sélectionnables. Cette variante donne la possibilité de sélectionner une qualité de restitution donnée parmi les qualités proposées. Un choix de qualité peut donc être fait en fonction des besoins ; par exemple, si le dispositif de lecture dispose d'un petit écran, une sélection d'une faible qualité sera suffisante ; à l'inverse, si l'écran est de grande taille, une qualité adaptée sera sélectionnée en conséquence.

Selon une sous-variante, seuls les contenus ayant une qualité de restitution supérieure ou égale au contenu en cours de restitution sont proposés à la sélection. Cette sous-variante est intéressante car offre non seulement une reprise depuis le début mais aussi la possibilité une liste de contenus filtrés en fonction de leurs qualités de restitution. Cette sous-variante garantit que le contenu sélectionné aura dans tous cas une qualité au moins égale au contenu est cours de diffusion. L'expérience utilisateur est excellente.

Selon un troisième mode de réalisation, qui pourra être mis en œuvre alternativement ou cumulativement avec le précédent mode, une source secondaire est un canal de diffusion fournissant le contenu sur demande. Dans ce deuxième mode, le contenu sélectionné peut être restitué depuis son début. Un utilisateur accède au contenu avec un retard par rapport au contenu principal en cours de restitution mais accède à ce dernier depuis son début.

Selon un troisième mode de réalisation, qui pourra être mis en œuvre alternativement ou cumulativement avec les précédents modes, une source secondaire est une chaîne de télévision dont l'instant de diffusion du contenu est à venir. Dans ce deuxième mode, la restitution du contenu demande un temps d'attente mais permet aussi tout comme le deuxième mode de réalisation, de voir le contenu depuis son début.

Selon un quatrième mode de réalisation, qui pourra être mis en œuvre alternativement ou cumulativement avec les précédents modes, la source sélectionnée est la source dont le délai d'accès au contenu est le plus court. Ce quatrième mode garantit un accès le plus rapidement possible au contenu demandé. Par exemple, si l'ensemble des sources de données obtenues incluent à la fois des sources aptes à fournir des contenus sur demande et des sources aptes à fournir des contenus en temps réel, la source sélectionnée est automatiquement le canal de diffusion fournissant le contenu sur demande. La réception du contenu sera probablement plus rapide.

Selon un premier aspect matériel, l'invention se rapporte à une entité de gestion de l'accès, par un dispositif de lecture, à un contenu multimédia accessible depuis une source, dite source principale, depuis laquelle la diffusion du contenu a commencé, caractérisé en ce qu'elle comprend
Un module de réception d'une requête d'accès audit contenu en cours de diffusion;
Un module d'obtention d'un ensemble de sources de données, dites sources secondaires, depuis lesquelles le contenu est accessible ;
Un module de réception, au cours de la lecture, d'une commande de déplacement de l'instant de lecture ;
Un module de sélection d'une source en fonction de la première qualité de restitution et de la deuxième qualité de restitution.

Selon un deuxième aspect matériel, l'invention se rapporte à un dispositif de lecture comprenant une entité de gestion telle que définie ci-dessus.

Selon un troisième aspect matériel, l'invention se rapporte à un programme d'ordinateur apte à être mis en œuvre sur une entité telle que définie ci-dessus, le programme comprenant des instructions de code qui, lorsqu'il est exécuté par un processeur, réalise les étapes du procédé de sélection définies ci-dessus.

Enfin, selon un quatrième aspect matériel, l'invention se rapporte à un premier support de données sur lequel a été mémorisée au moins une série d'instructions de code de programme pour l'exécution d'un procédé de gestion tel que défini en liaison avec le deuxième aspect fonctionnel.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de contrôle d'affichage précité.

L'invention sera mieux comprise à la lecture de la description qui suit, donnée à titre d'exemple et faite en référence aux dessins annexés sur lesquels :
[Fig. 1] La figure 1 représente un système informatique sur lequel est illustré un exemple de réalisation de l'invention.
[Fig. 2] La figure 2 est un schéma synoptique simplifié de la structure matérielle du dispositif de lecture ;
[Fig. 3] La figure 3 est un schéma synoptique simplifié de la structure matérielle du serveur ;
[Fig. 4] La figure 4 illustre plusieurs canaux de diffusion pour un même contenu avec des instants de diffusion distincts étalés dans le temps.

### Description détaillée d'un exemple de réalisation illustrant l'invention :

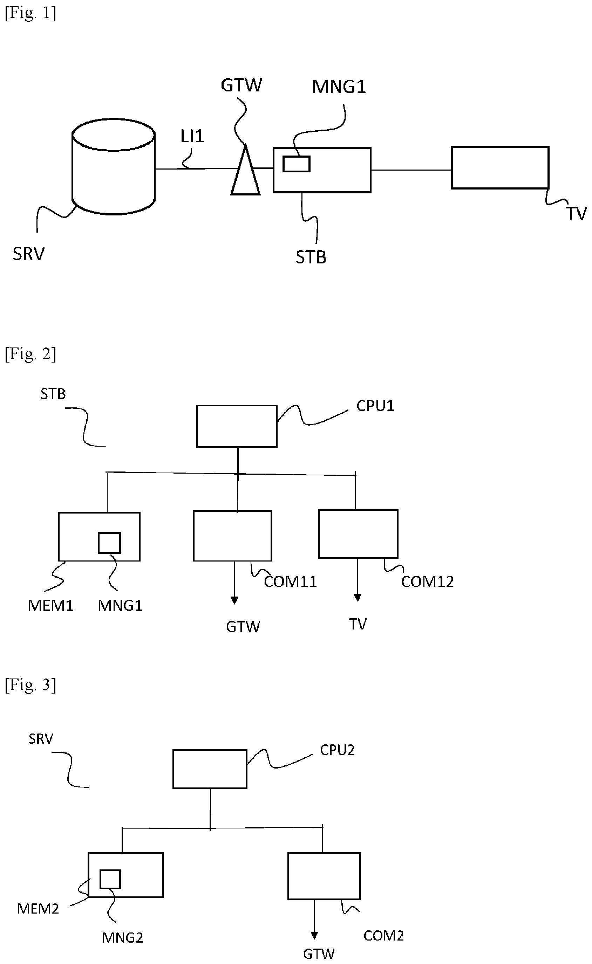

La figure 1 représente un système informatique dans lequel est mis en œuvre un réseau de diffusion de contenus appelé CDN (Content Distribution Network) par l'homme du métier depuis lequel sont transmis des contenus à destination de dispositifs clients ou dispositifs de lecture de contenus.

Dans notre exemple, le système comprend un seul dispositif de lecture. Cependant l'invention s'applique à un nombre quelconque de dispositifs de lecture.

Le dispositif de lecture est par exemple un décodeur STB.

Le contenu multimédia visé ici est un contenu vidéo correspondant à une chaîne de télévision sur laquelle sont diffusés des programmes télévisés ayant une heure de début correspondant à une heure de diffusion programmée et une heure de fin.

Une fonction « lire depuis le début » est prévue pour voir un contenu depuis son début lorsque celui-ci a déjà débuté.

Le système informatique comprend un dispositif de lecture de flux multimédia STB, par exemple un décodeur connecté à un terminal de restitution TV tel qu'une télévision.

Dans notre exemple, le dispositif de lecture STB est connecté sur un port du dispositif de restitution dispositif de restitution TV ; le dispositif de lecture et le dispositif de restitution dispositif de restitution TV pourrait aussi former un seul et unique dispositif.

Dans notre exemple, le dispositif de lecture STB est situé dans un réseau local LAN géré par une passerelle domestique GTW. Le contexte du réseau local est donné à titre d'exemple et pourrait être transposé aisément à un réseau Internet de type « best effort », un réseau d'entreprise, etc.

La passerelle GTW est apte à communiquer via un réseau de télécommunication LI1 tel qu'un réseau étendu WAN connu de l'homme du métier.

Le CDN est constitué de serveurs reliés en réseau dans le réseau étendu ; ces serveurs coopèrent afin de mettre des contenus multimédias à disposition des utilisateurs. Afin de simplifier l'exposé de l'invention, un seul serveur de contenus SRV sera représenté sur la figure 1 pour représenter le CDN.

Le serveur de contenus SRV se trouve, dans notre exemple, dans le réseau étendu WAN. Le serveur SRV dispose de plusieurs sources de contenus multimédia.

Le serveur de contenus SRV reçoit par exemple des chaînes de contenus de télévision numérique en provenance d'un réseau de télévision diffusée (non représenté), et les met à disposition des terminaux clients, ici le dispositif de lecture STB.

Le serveur de contenus SRV met aussi à disposition des contenus du type vidéo à la demande, télévision à la demande, ou tout autres contenus, par exemple stockés sur un enregistreur installé dans le dispositif de lecture, dont la transmission n'est pas programmée comme pour la télévision.

Les contenus CNT sont mis à disposition dans un format donné. Un tel contenu CNT est, par exemple, un contenu téléchargé en mode de streaming adaptatif. La norme MPEG-DASH (pour l'anglais "Dynamic Adaptive Streaming over HTTP", en français « diffusion en flux adaptatif dynamique sur HTTP ») est un standard de format de diffusion audiovisuelle sur Internet ; ce standard se base sur la préparation du contenu en différentes représentations de qualité et débit variables, découpées en segments de courte durée (de l'ordre de quelques secondes), également appelés « chunks » par l'homme du métier. Chacun de ces segments est rendu disponible individuellement au moyen d'un protocole d'échange entre le terminal de restitution et le serveur fournisseur de contenus multimédias. Le protocole principalement ciblé est le protocole HTTP, mais d'autres protocoles (par exemple FTP) peuvent également être utilisés. L'organisation des segments et les paramètres associés sont publiés dans un fichier de description au format XML. Nous ne rentrerons pas plus dans les détails de ce mode de téléchargement car sans intérêt pour l'exposé de l'invention.

La figure 2 représente une architecture d'un dispositif de lecture STB. Ce dispositif STB comprend, classiquement, des mémoires MEM1 associées à un processeur CPU1. Les mémoires peuvent être de type ROM (de l'anglais « Read Only Memory ») ou RAM (de l'anglais « Random Access Memory ») ou encore Flash.

Le décodeur STB peut transmettre un contenu à restituer au dispositif de restitution TV via un module de communication COM12. Ce module COM12 est par exemple une liaison HDMI.

Le décodeur STB communique avec la passerelle via un module Ethernet pour une communication locale avec fils ou via un module radio de type Wi-Fi pour une communication locale sans fils avec la passerelle résidentielle GTW. Le module en question est référencé COM11 sur la figure 2.

Le décodeur STB comprend une entité de téléchargement en mode streaming (non représentée) apte à gérer le téléchargement de segments. Le décodeur STB comprend également une entité de gestion MNG1, dite première entité de gestion dans la suite, dont la fonction sera décrite ci-dessous.

En référence à la figure 3, le serveur SRV également est équipé d'au moins un processeur CPU2 et de mémoires MEM2 pour la réalisation de traitement informatique. Le serveur est également équipé d'une entité de gestion MNG2, dite deuxième entité, apte à gérer la transmission d'un contenu du serveur SRV à destination d'un ou plusieurs dispositifs de lecture. Le serveur SRV communique avec la passerelle GTW via réseau WAN pour une communiquer avec la passerelle résidentielle GTW. Le module en question est référencé COM2 sur la figure 3.

Un contenu multimédia CNT est accessible depuis une source SP, dite source principale, depuis laquelle la diffusion du contenu a commencé. Un déplacement de l'instant de lecture, au cours de la lecture, est apte à déclencher une lecture depuis une première source sélectionnée par défaut et offrant une première qualité de restitution. La première source est par exemple une source de données apte à fournir un contenu en mode unicast.

Selon l'invention, la première entité l'entité de gestion MNG1, sur détection d'une sélection d'un contenu principal, dont la diffusion a démarré depuis un certain temps, réalise les étapes suivantes :
a) Une étape de réception d'une requête d'accès audit contenu en cours de diffusion;
b) Une étape d'obtention d'un ensemble de sources de données SS1(VOD)/SS2(TVOD)/SS3(RCD), dites sources secondaires, depuis lesquelles le contenu est accessible ;
c) Une étape de réception, au cours de la lecture, d'une commande de déplacement de l'instant de lecture ;
d) Une étape de sélection de la source en fonction de la première qualité de restitution et de la deuxième qualité de restitution.

Le processeur CPU1 de l'entité MNG1 est chargé de l'exécution des étapes précédentes.

La deuxième entité MNG2 réalise de son côté une étape réception de la requête d'accès et de transmission du contenu demandé depuis la source demandée.

A noter que l'étape a) peut être effectuée avant réception de la sélection du contenu principal.

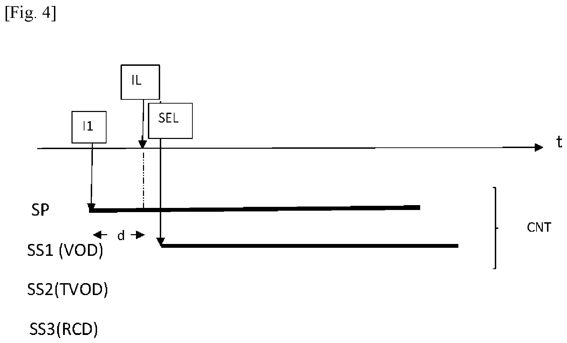

Dans notre exemple, en référence à la figure 4, un contenu télévisé est prévu à la diffusion sur une source principale telle qu'une chaîne de télévision. La chaine de télévision et l'instant de diffusion associé I1 est celui prévu par défaut dans un plan de service d'un fournisseur de contenus. Cet instant est généralement visible via un guide programme dans lequel apparaît l'ensemble des contenus télévisés et les heures de diffusion respectives. Le guide de programme est généralement accessible sur demande et affiché par le biais d'une interface graphique sur un écran.

Selon l'invention, lorsqu'une chaîne de télévision est sélectionnée à un instant IL, ultérieur à l'instant I1 défini ci-dessus, et que donc un programme télévisé est en cours de diffusion sur cette chaîne de télévision, et que la fonction « reprise depuis le début » (start over) est activée, la première entité MNG1 déclenche une recherche de sources de données, dites sources de données secondaires, sur lesquelles le contenu est accessible. Le contenu peut en effet être prévu à la diffusion, ou déjà en cours de diffusion, sur une autre chaîne de télévision, ou plus probablement disponible sur un canal de type VOD (sigle de Video On Demand) ou TVOD (sigle de Transactional Video On Demand), ou encore sur un enregistreur.

A noter que cette étape recherche peut être réalisée avant la sélection d'une chaîne de télévision.

Pour cela, la première entité de gestion MNG1 installée dans le dispositif de lecture STB, après exécution par le processeur CPU1, va accéder aux informations relatives au plan de service offert par le serveur SRV et recherche toutes les sources de données secondaires aptes à fournir le contenu demandé.

Rappelons ici qu'un plan de service fournit tous les paramètres nécessaires pour s'abonner ou se désabonner d'un flux multicast notamment l'adresse IP et le port logiciel pour accéder à ce flux multicast.

Supposons que la première entité de gestion MNG1 identifie trois sources de données secondaires SS1-SS3 aptes à fournir le contenu souhaité.

Prenons un exemple d'un contenu CNT, par exemple un film de cinéma, dont la diffusion officielle est programmée sur le canal principal SS1 un samedi soir à 20h00 (I1=20h00).

Le décodeur STB reçoit, dans un premier temps, une demande d'accès au contenu CNT via la chaîne de télévision sélectionnée représentative de la source de données principale. En référence à la figure 4, on suppose que la demande d'accès au contenu est reçue à un instant IL par exemple à 20h11 (IL=20h11).

On comprend à ce stade, à cet instant IL, que le contenu CNT demandé est déjà en cours de diffusion depuis une durée « d » et que donc l'utilisateur a manqué le début (une ligne continue verticale illustre la restitution du contenu VOD). La première entité MNG1 reçoit cette demande d'accès au contenu.

La demande d'accès peut provenir d'une commande d'accès issue d'une télécommande apte à télécommander le décodeur STB.

On suppose que le la fonction « reprise depuis le début » est activée.

Supposons que la première entité MNG1 trouve plusieurs sources de données secondaires SS1(VOD)/SS2(TVOD)/SS3(RCD) aptes à fournir le contenu demandé, respectivement. SS2(TVOD) est par exemple une plateforme proposant des contenus à la demande TVOD, SS3(RCD) est par exemple un enregistreur.

Dans notre exemple, l'entité de gestion MNG1 requiert un affichage des différentes sources de données SS1(VOD)/SS2(TVOD)/SS3(RCD) sur l'écran et permet une sélection d'une des sources depuis la télécommande.

Supposons que la source de données secondaire SS1(VOD) est sélectionnée.

Après réception de la sélection de la source de données secondaire, l'entité de gestion MNG1 requiert SEL un accès au contenu depuis la source de données secondaire SS1(VOD).

Pour cela, l'entité exécute le service VOD associé de manière à accéder au contenu VOD.

A ce stade, une lecture du contenu VOD peut être démarrée (une ligne continue verticale illustre la restitution du contenu VOD).

On constate ici que, bien que la diffusion ait commencé depuis une durée « d » sur le canal principal associé à la source de données principale, l'accès à une source secondaire du type VOD permet de lire le contenu depuis le début. L'effet résultant est le même qu'une demande de lecture comme si l'accès avait été effectué à I1=20h00. En prime, l'accès à une source secondaire peut aussi dans certains cas permettre un accès à un contenu de meilleure qualité que la qualité du contenu diffusé sur le canal principal. En effet, la plupart du temps les contenus VOD sont souvent disponibles en plusieurs formats (HD, UHD, 4K, etc.) ; La sélection peut alors être effectuée judicieusement en fonction de la qualité souhaitée. Rappelons ici que la qualité est dépendante du débit d'encodage utilisé pour encoder les flux vidéo.

L'invention permet donc de sélectionner un format donné en fonction par exemple de la taille et de la résolution de l'écran du dispositif de restitution. Cela est d'autant plus intéressant lorsque le dispositif de lecture utilisé permet la réception et la restitution du contenu dans une meilleure qualité que celle diffusée sur le flux Live. Dans ce cas, le dispositif de lecture propose à l'utilisateur de lire ce contenu avec une qualité supérieure.

La première entité de gestion MNG1 peut aussi ne pas proposer toutes les sources secondaires trouvées ou toutes les qualités d'image disponibles. L'entité de gestion MNG1 peut filtrer des sources secondaires voire des qualités d'images proposées. Le filtre peut se baser sur plusieurs paramètres tels que l' environnement du réseau du dispositif de lecture (fibre/ADSL/Etc.), la capacité du dispositif de lecture à décoder le contenu dans une qualité supérieure à celle diffusée depuis la source principale, etc.

Selon une variante, la source sélectionnée est la source dont le délai d'accès au contenu est le plus court.

Par exemple, lorsque l'ensemble de sources secondaires comprend un canal qui offre des contenus sur demande et un enregistreur, l'enregistreur sera automatiquement sélectionné car plus rapide à fournir le contenu.

Par exemple, lorsque l'ensemble de sources secondaires comprend à la fois un canal de diffusion fournissant le contenu sur demande et un canal de diffusion en temps réel, la source sélectionnée est automatiquement un canal de diffusion fournissant le contenu sur demande. En effet, sélectionner un contenu diffusé en temps réel impliquerait de recevoir soit un contenu dont la diffusion a commencé, soit un contenu dont la diffusion est à venir. La probabilité de recevoir le contenu depuis son début, lorsque la demande de lecture est reçue à l'instant IL, est faible. A l'inverse, un contenu à la demande permet une réception avec un délai d'attente réduit ; le délai d'attente se limiterait au délai de traitement de la demande d'accès au contenu par le processeur CPU1, de l'envoi d'une requête et de la réception du contenu pour être restitué.

Selon une variante, une source secondaire est sélectionnée si la deuxième qualité de restitution associée à cette source secondaire est au moins égale à la première qualité de restitution qui dans notre exemple est associée à la source unicast.

Précisons enfin que la première entité de gestion MNG1 est équipée des modules suivants pour la réalisation de l'invention :
a. Un module de réception apte à recevoir une requête d'accès audit contenu en cours de diffusion ;
b. Un module d'obtention apte à obtenir un ensemble de sources de données, dites sources secondaires, depuis lesquelles le contenu est accessible ;
c. Un module de réception, au cours de la lecture, d'une commande de déplacement de l'instant de lecture ;
d. Un module de sélection de la source en fonction de la première qualité de restitution et de la deuxième qualité de restitution.

Précisons enfin ici que le terme module ou le terme entité peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

## Revendications

1. Procédé de gestion de l'accès, par un dispositif de lecture (STB), à un contenu multimédia (CNT) accessible depuis une source (SP), dite source principale, depuis laquelle la diffusion du contenu a commencé, un déplacement de l'instant de lecture, au cours de la lecture, étant apte à déclencher une lecture depuis une première source sélectionnée par défaut et offrant une première qualité de restitution, le procédé comprenant
a. Une étape de réception d'une requête d'accès audit contenu en cours de diffusion;
b. Une étape d'obtention d'un ensemble de sources de données (SS1(VOD)/SS2(TVOD)/SS3(RCD)), dites sources secondaires, depuis lesquelles le contenu est accessible ;
c. Une étape de réception, au cours de la lecture, d'une commande de déplacement de l'instant de lecture ;
d. Une étape de sélection d'une source en fonction de la première qualité de restitution et de la deuxième qualité de restitution.

2. Procédé selon la revendication 1, **caractérisé en ce que** la source secondaire est sélectionnée si la deuxième qualité de restitution est au moins égale à la première qualité de restitution.

3. Procédé selon la revendication 1, **caractérisé en ce que** l'étape d'obtention est suivie d'une étape de demande de restitution d'identifiants sélectionnables représentatifs des sources de données secondaires.

4. Procédé selon la revendication 3, **caractérisé en ce que**, lorsque plusieurs qualités sont disponibles pour un même contenu, tout ou partie des qualités d'images disponibles sont restitués et sélectionnables.

5. Procédé selon la revendication 4, **caractérisé en ce que**, seuls les contenus ayant une qualité de restitution supérieure ou égale au contenu en cours de restitution sont proposés à la sélection.

6. Procédé selon a revendication 1, **caractérisé en ce qu'**une source secondaire est un canal de diffusion fournissant le contenu sur demande.

7. Procédé selon a revendication 1, **caractérisé en ce que** la source sélectionnée est la source dont le délai d'accès au contenu est le plus court.

8. Entité de gestion (MNG1) de l'accès, par un dispositif de lecture (STB), à un contenu multimédia (CNT) accessible depuis une source (SP), dite source principale, depuis laquelle la diffusion du contenu a commencé, un déplacement de l'instant de lecture, au cours de la lecture, étant apte à déclencher une lecture depuis une première source sélectionnée par défaut et offrant une première qualité de restitution, **caractérisé en ce qu'**elle comprend
a. Un module de réception apte à recevoir une requête d'accès audit contenu en cours de diffusion ;
b. Un module d'obtention apte à obtenir un ensemble de sources de données, dites sources secondaires, depuis lesquelles le contenu est accessible ;
c. Un module de réception, au cours de la lecture, d'une commande de déplacement de l'instant de lecture ;
d. Un module de sélection d'une source en fonction de la première qualité de restitution et de la deuxième qualité de restitution.

9. Programme d'ordinateur apte à être mis en œuvre sur une entité de gestion (MNG1) telle que définie dans la revendication 8, le programme comprenant des instructions de code qui, lorsqu'il est exécuté par un processeur, réalise les étapes du procédé définies dans la revendication 1.
